# EUROPÄISCHE PATENTANMELDUNG

(11) **EP 1 060 670 A1**
(43) Veröffentlichungstag der Anmeldung: **20.12.2000**
(21) Anmeldenummer: 00112470.0
(22) Anmeldetag: 10.06.2000
(51) Int. Cl.: A21C 5/00, A21C 11/10

(54) **Handbetriebene Portioniervorrichtung zur Herstellung von Teigscheiben für Pizzas und Verfahren zum Betrieb der Portioniervorrichtung**

(30) Priorität: 15.06.1999 CH 111699
(71) Anmelder: Grieco, Leonardo, 21050 Saltrio (Varese) (IT)
(72) Erfinder: Grieco, Leonardo, 21050 Saltrio (Varese) (IT)
(74) Vertreter: Gaggini, Carlo, Ing.

(57) **Zusammenfassung**

Die vorliegende Erfindung betrifft eine handbetriebene Portioniervorrichtung zum Zubereiten von Teigscheiben aus Pizzateig von abgemessenem Volumen sowie ein Verfahren zum Betrieb der Portioniervorrichtung.

Die erfindungsgemässe Portioniervorrichtung ist gekennzeichnet durch zwei Teller (4, 8), auf einen von welchen (4) eine Teigkugel zum Umformen in eine Teigscheibe von abgemessenem Volumen aufgelegt wird, und durch ein Schneidorgan (12) für den überschüssigen Teig (27) (Fig. 4). Die Teigkugel (25) wird zuerst in eine geschlossene Kammer eingedrückt, die durch die beiden einander angenäherten Teller (4, 8) und der zylindrischen Seitenwand des Schneidorgans (12) gebildet wird, und wird sodann, nachdem die Kammer nach dem Absenken des Schneidorgans freigegeben ist, weiter bis auf die gewünschte Dicke (h) der fertigen Teigscheibe (26) zusammengedrückt (Fig. 4). Der Ring von überschüssigem Teig wird sodann abgeschnitten, indem das Schneidorgan (12) angehoben wird.

Die erfindungsgemässe Portioniervorrichtung eignet sich besonders gut zum Herstellen von Teigscheiben, die sich zum radialen Ausziehen auf die gewünschten endgültigen Abmessungen mittels Maschinen zum Ausziehen von Pizzas, die unter Einsatz der Zentrifugalkraft arbeiten.

## Beschreibung

Die vorliegende Erfindung betrifft eine handbetriebene Portioniervorrichtung zur Herstellung von Teigscheiben für Pizzas von abgemessenem Volumen gemäss dem Oberbegriff des Patentanspruchs 1, sowie ein Verfahren zum Betrieb derselben gemäss dem Anspruch 12.

Beim handwerklichen Herstellen von Pizzas, bei dem die Teigscheiben einzeln von einer dafür mehr oder weniger angelernten Person zubereitet werden, umfasst dieser Prozess unweigerlich das Formen einer Kugel aus dem vorbereiteten Teig, die ein im voraus festgelegtes Gewicht aufweist (in der Regel im Bereich von 200 g), und die sodann zu einer Pizzascheibe vom gewünschten Volumen ausgezogen wird. Wenn das Formen der Teigscheibe vollständig von Hand ausgeführt wird, vorzugsweise von einem erfahrenen Pizzaiolo, der den Teig zur endgültigen Form auszieht, indem er den Teig in der Luft herumwirbelt, verursacht das zuerst erfolgende Formen der Teigkugeln keine besonderen Probleme hinsichtlich der Konstanz des Gewichts (bzw. des Volumens, das bei einem homogenen und gut aufgegangenen Teig sehr gut mit dem Gewicht korreliert). In der Tat kann sich der Pizzaiolo dabei in der Regel auf seine grosse Geschicklichkeit verlassen, dank der er einerseits den Teig in Kugeln (oder Stücke) von ziemlich konstantem Gewicht unterteilen kann, das innerhalb einer annehmbaren Toleranz liegt, und anderseits allfällige Fehler in der Gewichtseinschätzung während der nächsten Behandlungsphase des Teigausziehens korrigieren kann. Wenn der Pizzaiolo bemerkt, dass er eine etwas zu schwere Teigkugel geformt hat, braucht er nichts weiter zu tun, als den Teig mit etwas weniger Schwung (und entsprechend geringerer Zentrifugalkraft, die in der Endphase auf die Teigscheibe einwirkt) "auszuziehen", so dass er trotzdem den gewünschten Scheibendurchmesser erreicht. Der einzige Unterschied zum idealen Ausziehen besteht dabei darin, dass der Teig etwas dicker ausfällt, was der geschickte Pizzaiolo mit der Backdauer leicht berücksichtigen kann. Umgekehrt genügt es, falls die Teigkugel etwas zu leicht ausfällt, den Teig etwas stärker auszuziehen, um eine Teigscheibe mit dem gleichen Durchmesser zu erhalten, die aber etwas dünner ist. All dies bedingt das Wirken eines sehr erfahrenen Pizzaiolos, der alle Arbeitsschritte von Hand selbst ausführt und daher in der Lage ist, bis zum letzten Moment Abweichungen im Zubereitungsprozess zu korrigieren.

In der letzten Zeit lässt sich eine anhaltende Entwicklung im Bereich der handwerklich-gewerblichen Herstellung von Pizzas beobachten, die sich stark beschleunigt hat mit der Einführung von Systemen zur mechanischen Ausbreitung der Teigscheibe mittels Geräten, die unter Anwendung der Zentrifugalkraft ― in gleicher Weise wie herkömmlicherweise der Pizzaiolo ― arbeiten. Diese Maschinen sind dabei in der Lage, ausgehend von einer Teigscheibe von etwa 18 cm Durchmesser eine Teigscheibe auf einen Enddurchmesser von je nach Wunsch etwa 35 oder 40 cm auszuziehen. Der Vorteil solcher Maschinen liegt in deren Arbeitsgeschwindigkeit (wenige Sekunden genügen zum Ausziehen mehrerer Teigscheiben) und hauptsächlich darin, dass die spezielle handwerkliche Geschicklichkeit eines professionellen Pizzaiolos nicht mehr benötigt wird. Jedermann ist auch ohne besondere Ausbildung in der Lage, Pizzascheiben von konstantem Durchmesser und konstanten Eigenschaften perfekt auszuziehen, was für kleine und mittlere Pizzerias einen nicht unwesentlichen Vorteil darstellt, die nicht immer in der Lage sind, sich einen geübten Pizzaiolo leisten zu können. Diese Maschinen zum Ausziehen von Pizzateig bearbeiten zudem mehrere Teigscheiben gleichzeitig (d.h. es werden mehr als eine Teigscheibe im gleichen Arbeitsgang ausgezogen), wobei sie aber zum korrekten Bearbeiten und Herstellen von Pizzascheiben, die alle den gleichen Durchmesser aufweisen, auf Teigscheiben (also eigentlich Zwischenprodukte im Zubereitungsprozess) von genau eingestelltem Gewicht angewiesen sind, d.h. deren Gewicht innerhalb genau festgelegter Toleranzgrenzen liegt. Die Maschine zum Ausziehen von Pizzateig kann dabei zwischen zu schweren und zu leichten Teigscheiben nicht unterscheiden, und vor allem wenn mehrere Teigscheiben in einem Bearbeitungsgang auszuziehen sind, unterwirft sie alle der gleichen Zentrifugalkraft, so dass die Pizzascheiben verschiedene Durchmesser aufweisen würden. Dies wäre offensichtlich keine gute Grundlage für die Arbeit der Pizzeria.

Ziel der vorliegenden Erfindung ist daher, eine handbetriebene Portioniervorrichtung vorzuschlagen, die einfach aufgebaut und einfach zu bedienen ist, mit der Teigscheiben von genau eingestelltem und konstantem Gewicht auch in kleinen und mittleren Pizzerien hergestellt werden können, wo Pizzas nach der Art der traditionellen Küche zubereitet werden und die sich deshalb zum Ausziehen des Pizzateigs mit einer Maschine zum Ausziehen des Teigs unter Zentrifugalkraft ausgerüstet haben,

Gemäss dem Stand der Technik sind bereits Teigportioniervorrichtungen bekannt, insbesondere in der Herstellung von Brot und ähnlicher Backwaren, wobei es sich aber meist um eigentliche Maschinen handelt, die nicht von Hand betrieben werden, und die für die Herstellung grosser Tagesmengen von Brotlaiben oder Brötchen, usw., ausgelegt sind. Solche Maschinen, die vorab zur Beschleunigung der Produktion von Brotteigkugeln dienen, ohne dabei den Teig übermässiger mechanischer oder thermischer Beanspruchung auszusetzen ― Beanspruchungen, welche die Qualität des Endprodukts beeinträchtigen würden ― arbeiten oft nach dem Prinzip eines Zylinders, in welchen der Teig eingesaugt und anschliessend mittels eines Kolbens ausgestossen wird. Dabei handelt es sich um Einrichtungen, die über eine Unterdruckquelle verfügen müssen, um den Teig einsaugen zu können. Solche Konstruktionen, deren Hauptnachteil in kleinen und mittleren Pizzerien darin zu sehen ist, dass sie eine Einsauganlage für den Teig benötigen und somit zu kompliziert und zu aufwendig würden, sind beispielsweise bekannt aus CH-583520, CH-490805, CH-604531 und CH-609212 sowie beispielsweise aus US-5269674.

Auch andere bekannte Arten von Trennvorrichtungen oder Portioniervorrichtungen für Teig sind nicht geeignet für die handwerklich betriebene Pizzeria, auf die sich die vorliegende Erfindung im besonderen bezieht: So beispielsweise die DE-3826934, die eine Teigtrennvorrichtung zeigt, die mit Messkammern arbeitet, die auf einer Dosiertrommel angeordnet und mit Auswerferkolben versehen sind, welche die Teigportionen auswerfen, oder die DE-3444085, in der eine Vorrichtung zum Portionieren des Teigs gezeigt ist, die mit einem Paar von Rollen arbeitet, die mit radial nach aussen vorstehenden Kammern versehen sind, deren Spitzen sich in einer gemeinsamen Ebene treffen und somit den Teig in Portionen unterteilen, legen recht komplexe Lösungen des mechanisch Problems dar, die sich für die Fabrikation grosser Stückzahlen pro Stunde eignen, wie sie in den heute üblichen industriellen Grossbäckereien vorkommen.

Auch sind handbetriebene Pressen zur Herstellung von Teigportionen bekannt, oder von Portionen ähnlicher pastöser Lebensmittel, wie beispielsweise aus der DE-2704432 oder DE-3809730. Im erstgenannten Fall handelt es sich jedoch lediglich um einen Mechanismus zur Bewegung des Kolbens mit konstantem Hub in einem mit Teig gefüllten Zylinder in solcher Weise, dass bei jeder Betätigung aus den unten am Zylinder angebrachten Öffnungen eine gleiche Materialmenge austritt: Der Zylinder dient also als Behälter, aus dem wie aus einer Zahnpastatube bei jeder von Hand ausgeführten Betätigung des Hebels eine vorgegebene Produktmenge ausgestossen werden soll. Im zweiten genannten Fall handelt es sich um die altbekannte Kartoffelpresse, d.h. um einen Zylinder mit Öffnungen im Boden, durch welche der von Hand betätigte Kolben eine bestimmte Menge Kartoffelmasse ― sogenannte "Spätzle" ― hinausdrückt, wobei die Erfindung lediglich vorsieht, dass der lösbare Gelenkstift des Betätigungshebels nicht verloren gehen kann: Bei beiden Vorrichtungen handelt es sich um manuell betätigte Teigpressen, die keinerlei Lehre bezüglich der Aufgabe der vorliegenden Erfindung geben können, nämlich der Herstellung von Teigscheiben von vorgegebenem Volumen, und somit vorgegebenem Gewicht, das entsprechend den oben geschilderten Gegebenheiten eingestellt wird.

Ferner ist eine Portioniervorrichtung zur Herstellung von Kugeln aus Pizzateig des Anmelders der vorliegenden Erfindung bekannt, die als Schweizer Patentanmeldung am 14.1.1999 eingereicht wurde und die Anmeldungsnummer 1999 0057/99 trägt.

Es handelt sich dabei um eine Portioniervorrichtung, die in der Lage ist, Kugeln aus Pizzateig herzustellen, d.h. Teigstücke von annähernd kugelrunder Form, die sich zum Formen von Pizzateigscheiben mittels mechanischer Ausziehmaschinen eignen, die Zentrifugalkraft anwenden, wie es dem Zweck der vorliegenden Erfindung entspricht. Gemäss diesem Vorschlag wird der Teig in einen tassenförmigen Behälter gepresst, der aus einer Kombination von Zylinder und Kolben gebildet wird. Zum Erreichen der gewünschten Einstellung des Volumens der Kugel weist die genannte Kammer sodann mindestens eine Öffnung auf, aus welcher die überschüssige Teigmenge austreten und von der im Innern der Kammer eingepressten Teigmenge abgetrennt werden kann.

Diese handbediente Portioniervorrichtung weist jedoch noch zwei in der praktischen Anwendung nicht unbedeutende Nachteile auf, nämlich:
a) Es werden Teigkugeln statt Teigscheiben hergestellt. Sollen diese Kugeln in der Teigausziehmaschine unter Zentrifugalkrafteinfluss richtig ausgezogen werden können, so müssen sie zuerst noch von Hand flachgedrückt werden, so dass sie dicke Teigscheiben (von etwa 10 mm Dicke oder mehr) bilden, die als Zwischenprodukt im Zubereitungsprozess gemäss der vorliegenden Erfindung zu betrachten sind, und
b) Das Auspressen des überschüssigen Teigs durch die in der Kammer vorgesehene Öffnung oder Öffnungen, hat sich als Arbeitsschritt erwiesen, der beträchtlichen Kraftaufwand erfordert, da der Teig infolge seiner zähen Konsistenz grossen Widerstand leistet, wenn er durch eine oder mehrere in einer geschlossenen Kammer vorgesehenen Öffnungen hinausgedrückt werden soll.
   Die dafür erforderlichen Kräfte sind zu hoch und erfordern eine besonders robuste Auslegung der Portioniervorrichtung, die viel Platz beansprucht, wenn die Kraftwirkung genügend übersetzt werden soll (Länge des Hebelarms).

Die vorliegende Erfindung setzt sich daher zum Ziel, das Problem der manuellen Vorbereitung des Teigs zum Ausziehen der Pizzascheiben im System unter Einwirkung der Zentrifugalkraft zu lösen, wobei die Nachteile der oben genannten Technik überwunden werden sollen. Insbesondere bezweckt die erfindungsgemässe handbetriebene Portioniervorrichtung:
a) die Herstellung von Teigscheiben von vorgegebenem Volumen anstelle von Teigkugeln. Die Teigscheiben eignen sich als Zwischenprodukt besser als Kugeln, da sich Teigscheiben unter dem Einfluss der Zentrifugalkraft zu Pizzateigscheiben ausbreiten lassen, ohne dass weitere zusätzliche Arbeitsschritte nötig werden, wie dies bei Kugeln der Fall ist, die vor dem endgültigen Ausziehen unter der Einwirkung der Zentrifugalkraft zuerst von Hand flachgedrückt werden müssen, so dass sie eine Scheibe bilden;
b) Reduktion der von Hand aufzubringenden Muskelkraft für die Bedienung der Vorrichtung und auch der auch der erforderlichen Abmessungen der Vorrichtung, sowie letztlich auch des Preises.

Diese Zielsetzungen werden erfüllt mit einer Portioniervorrichtung gemäss dem Oberbegriff des Anspruchs 1 und gekennzeichnet durch die Eigenschaften gemäss dem kennzeichnenden Teil des gleichen Anspruchs 1.

Das Prinzip, auf dem die vorliegende Erfindung beruht, besteht darin, dass das Hinausdrücken des überschüssigen Teigs durch die in einer geschlossenen Kammer vorgesehenen Öffnungen, wie es gemäss dem Stand der Technik der genannten Schweizer Patentanmeldung Nr. 1999 0057/99 beschrieben ist, ersetzt wird durch ein Abschneiden des überschüssigen Teigs, der zwischen zwei Druckplatten seitlich frei austritt, mittels eines Messers. Das Abschneiden eines Teigrings erfordert wesentlich weniger Kraftaufwand als das Herausdrücken einer gleichen Teigmenge durch die Öffnungen. Zudem wird gemäss der vorliegenden Erfindung der Teig nicht mehr in einer im wesentlichen geschlossenen Kammer zusammengedrückt, die nur eine oder mehrere Ausgangsöffnungen für den überschüssigen Teig aufweist, sondern nur zwischen zwei horizontalen Platten zusammengedrückt, die seitlich längs des ganzen Umfangs offen sind, was einen wesentlich geringeren Kraftaufwand erfordert. Dank diesem neuartigen Konzept des Zusammendrückens des Teigs in einer seitlich im wesentlichen offenstehenden Kammer und dank dem freien Abschneiden des überschüssigen Teigs lassen sich die Zielsetzungen der vorliegenden Erfindung realisieren.

Die vorliegende Erfindung wird im Folgenden unter Bezugnahme auf einige abgebildete Ausführungsbeispiele näher beschrieben. Es zeigen die:
- Fig. 1: die erfindungsgemässe Portioniervorrichtung, teilweise im Schnitt dargestellt, während des ersten Arbeitsschrittes,
- Fig. 2 bis 4: die Portioniervorrichtung gemäss der Fig. 1 in drei aufeinander folgenden weiteren Arbeitsschritten,
- Fig. 5: eine Variante der erfindungsgemässen Portioniervorrichtung mit einer Reihe konstruktiver Einzelheiten, welche die Bedienung der Maschine erleichtern.

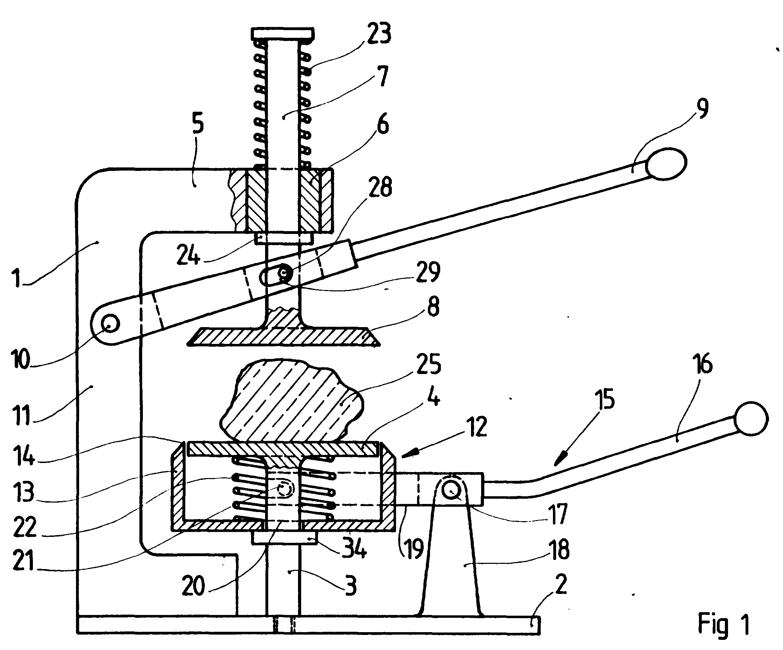

In den Figuren 1 bis 4 ist eine erste Variante der handbetriebenen Portioniervorrichtung gemäss der vorliegenden Erfindung in vier Arbeitsstellungen gezeigt, welche die hauptsächlichen vier Arbeitsschritte beim Ausformen eines im Volumen (bzw. Gewicht) nicht abgemessenen Stückes Pizzateig zu einer kreisförmigen Scheibe von vorbestimmtem Volumen darstellen, die sich zum Ausziehen unter der Einwirkung der Zentrifugalkraft eignet. Die Darstellungen der Fig. 1 bis 4 sind zur besseren Verständlichkeit teilweise im Schnitt gezeigt.

In den genannten Figuren ist ein Träger in Jochform mit 1 bezeichnet, der auf einer Grundplatte 2 befestigt ist.

Auf der Grundplatte 2 ist ein senkrecht stehender Trägerstift 3 befestigt, auf dessen oberem Ende ein unterer kreisrunder Teller 4 sitzt. Der Teller 4 in der hier gezeigten Ausführungsform steht also im Raum fest, da er mit der Grundplatte 2 und dem Träger 1 der Maschine fest verbunden ist. In einer nicht dargestellten Variante der Vorrichtung kann der kreisrunde horizontale untere Teller in vertikaler Richtung auch verschiebbar ausgebildet sein, d.h. die Vorrichtung kann auf verschiedene, untereinander analoge Arten ausgelegt sein, wie dies aus der Beschreibung der Funktionsweise der Vorrichtung klarer hervorgehen wird.

Am oberen horizontalen Arm 5 des Jochs des Trägers 1 befindet sich eine Lagerung 6, in der sich ein Stössel 7 bewegt, der an seinem unteren Ende einen kreisrunden horizontalen oberen Teller 8 trägt, dessen Durchmesser gleich gewählt ist wie jener des unteren Tellers 4, und der mit dem unteren Teller 4 koaxial fluchtend angeordnet ist.

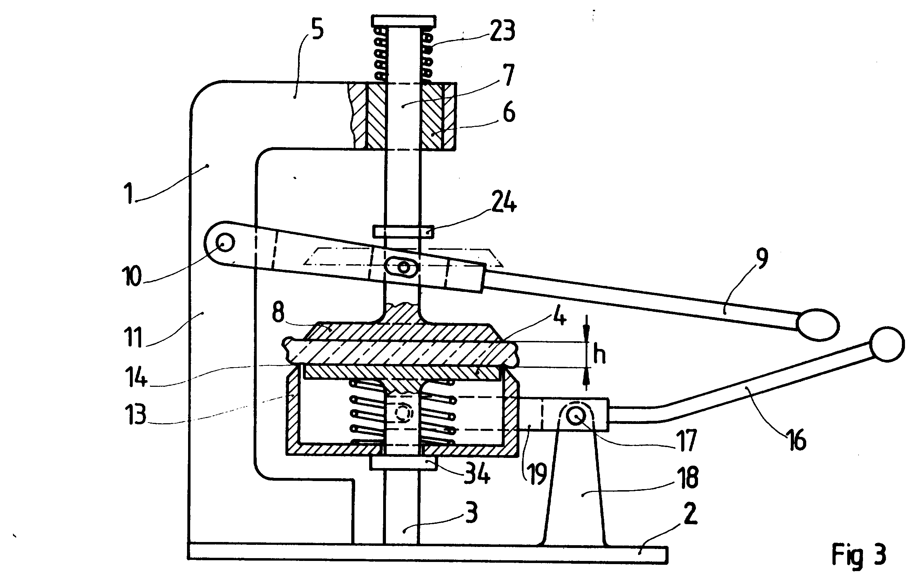

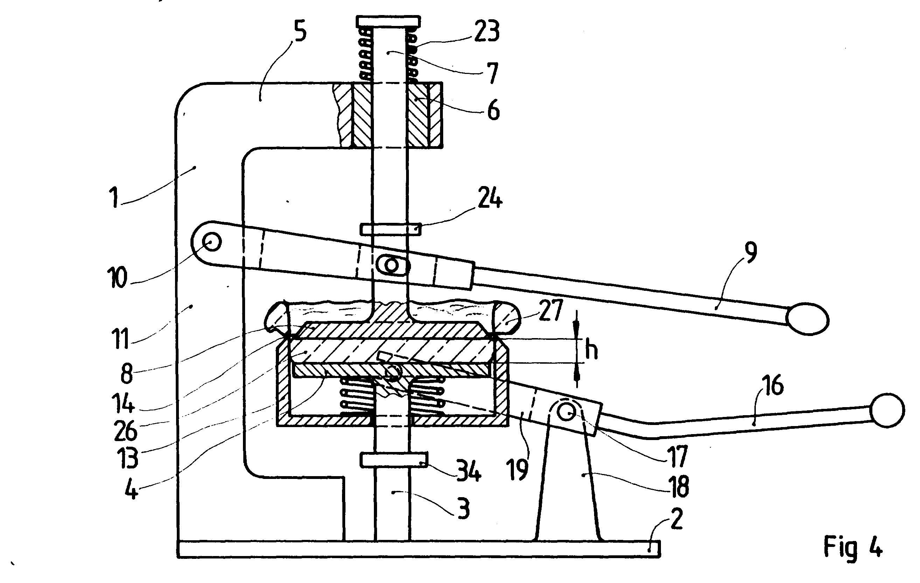

Der obere Teller 8 kann gegenüber dem unteren Teller 4 und koaxial mit diesem abgesenkt oder hochgehoben werden, da der Stässel 7 im Lager 6 verschiebbar ist: Zu diesem Zweck sind Mittel vorgesehen, die in diesem Fall mit dem Bedienungshebel 9 dargestellt sind, dessen Drehpunkt im Stift 10 liegt, der im Arm 11 des Trägers 1 eingesetzt ist, mit deren Hilfe der obere Teller 8 auf und ab bewegt werden kann, so dass er bis auf einen vorbestimmten Endabstand h (vergleiche die Figuren 3 und 4) abgesenkt werden kann, der die gewünschte Dicke der Teigscheibe bestimmt, wie dies im Folgenden gezeigt wird.

Auf dem Stift 3, der den unteren Teller 4 trägt, ist sodann ein von unten her wirkendes Schneidorgan 12 für den überschüssigen Teig eingefügt, das aus einer Büchse 13 besteht, welche den unteren Teller 4 umgibt ― wobei nichts im Weg stünde, die ganze Vorrichtung "umzukehren", bzw. in solcher Weise auszulegen, dass die Büchse 13 statt den unteren Teller 4 den oberen Teller 8 umgäbe, in solcher Weise, dass die Lage der Büchse 13, bzw. des Schneidorgans 12 im Rahmen der vorliegenden Erfindung nicht unwiderruflich festgelegt werden muss. Die Büchse 13 ist mit einer schneidenden Kante 14 versehen. Diese ist zudem ausserhalb des Raums zwischen den beiden Tellern 4 und 8 ― in Ringform ― angeordnet, während sich diese beiden Teller einander annähern, welche Arbeitsphase in den Figuren 1 bis 3 gezeigt ist, wie dies bei der folgenden Beschreibung der Funktionsweise der Vorrichtung noch genauer erklärt wird.

Das Schneidorgan 12, bzw. die Büchse 13, ist mit Mitteln 15 versehen, die zum achsialen Verschieben der Büchse 13 gegenüber dem Teller 4, bzw. 8 dienen. Dank dieser Verschiebung beginnt die Büchse 13 in einem abschliessenden Arbeitsschritt der Ausformung der Teigscheibe, in den Teig im Ringraum zwischen den beiden Tellern 4 und 8 einzugreifen, wie dies aus der nachfolgenden detaillierteren Beschreibung der Funktionsweise hervorgeht, die in der Fig. 4 dargestellt ist. In dieser Weise schneidet die Schneidkante 14 der Büchse 13 bei ihrer Vertikalbewegung (nach oben in der in den in den Figuren 1 bis 4 dargestellten Lösung) den Ring überflüssigen Teigs ab, der radial aus dem Zwischenraum zwischen den beiden Tellern 4 und 8 austritt.

In der in den Figuren 1 bis 4 dargestellten Ausführungsform bestehen die Mittel zum achsialen Verschieben der Schneidbüchse 13 aus einem Hebel 16, der mittels eines horizontal angeordneten Gelenkstiftes 17 an einem Träger 18 angelenkt ist, der seinerseits unten fest mit der Grundplatte 2 verbunden ist.

Das andere Ende des Hebels 16 bildet eine Gabel 19 welche die Büchse 13 auf jeder Seite längs des Umfangs über 90° umgreift: Auf jedem Arm der Gabel 19 ist ein Schlitz 20 angebracht, in den sich je ein Stift 21 erstreckt, der an der Wand der Büchse 13 etwa auf deren halber Höhe angebracht ist.

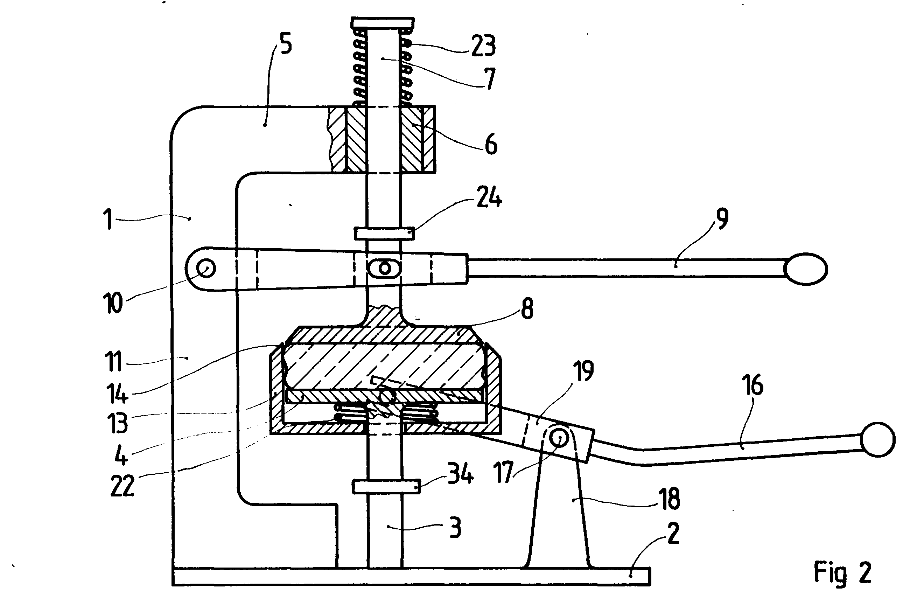

Wird der Hebel 16 nach unten gedrückt (wie dies beispielsweise in den Figuren 2 und 4 gezeigt ist), so wird dadurch die Büchse 13 unter Überwindung der Kraft eines Kraftspeichers 22 (im vorliegenden Fall einer Schraubenfeder) nach oben gehoben. Aus der Fig. 1 ist ebenfalls ersichtlich, dass ein Kraftspeicher 23, im gezeigten Fall ebenfalls in der Form einer Schraubenfeder, auf den oberen Teller 8 einwirkt und ihn nach oben gegen einen vertikalen Anschlag 24 zieht.

Es handelt sich sowohl im Fall der Schraubenfeder 23 als auch im Fall der Schraubenfeder 22 um bevorzugte Ausführungsformen der vorliegenden Erfindung, da diese beiden Einrichtungen die Bedienung der Vorrichtung erleichtern, jedoch für deren Funktionieren nicht unerlässlich sind. Die Federn 22 und 23 bzw. entsprechende Kraftspeicher halten automatisch den oberen Teller 8 in seiner hochgehobenen Stellung und die Büchse 13 in ihrer untersten Stellung, so dass der grösste Abstand zwischen den beiden Tellern 4 und 8 für das manuelle Einbringen einer Teigkugel 25 (vergleiche die Fig. 1) frei bleibt. Die einzige Bedingung, der die Teigkugel 25 in der praktischen Anwendung genügen muss, besteht darin, dass ihr Volumen mindestens um einen vorausbestimmten Prozentsatz grösser sein muss als das Volumen der fertig ausgeformten Teigscheibe 26 (vergleiche die Fig. 4), die hergestellt werden soll. Im Übrigen spielt die Form der Teigkugel 25 im Zusammenhang mit der vorliegenden Erfindung keinerlei Rolle, da diese lediglich den Zweck hat, wie dies im Folgenden näher erklärt wird, dem Teigstück 25 eine genaue und konstante Form zu geben.

Die in den Figuren 1 bis 4 dargestellte Ausführungsform der vorliegenden Erfindung ist nicht die einzige Möglichkeit, die Vorteile der erfindungsgemässen Portioniervorrichtung zu erreichen, obschon sie eine bevorzugte Lösung darstellt, die eine ganze Reihe von Teillösungen in sich vereint, von denen jede eine vorteilhafte Ausführungsform einer Einzelheit der Portioniervorrichtung darstellt. Dabei ist klar, dass es gemäss der vorliegenden Erfindung ausreicht, die zwei Teller 4 und 8 so anzuordnen, dass sie einander bis auf eine im voraus bestimmte Distanz voneinander angenähert werden können, die der gewünschten Dicke h der Teigscheibe 26 (Figuren 3 und 4) entspricht, und um dies zu erreichen, kann einer der Teller 4 oder 8 gegenüber dem Raum fix angeordnet und der andere 8 oder 4 in Richtung auf den andern Teller hin verschiebbar angeordnet werden, oder die beiden Teller 4 und 8 können gleichzeitig bis auf den gewünschten Abstand h aufeinander zu bewegt werden. Auch die Stellung der Büchse 13, welche das Schneidorgan für den überschüssigen Teig bildet, kann so gewählt werden, dass sie in ihrer Ruhelage unten, um den unteren Teller 4, oder aber oben um den oberen Teller 8 angeordnet sein kann. Im erstgenannten Fall wird die Büchse sodann nach oben geschoben, wie dies in den Figuren 1 bis 4 dargestellt ist, damit sie in den Ringraum zwischen den beiden Tellern 4 und 8 eindringt und somit den überschüssigen Teigring 27 (vergleiche die Fig. 4) abschneidet. Im zweiten Fall (nicht dargestellt) muss die Büchse von oben nach unten geschoben werden, um den Ring des überschüssigen Teigs abzuschneiden. Auch in diesem Fall erreicht die Vorrichtung alle erfindungsgemässen Eigenschaften der vorliegenden Erfindung. In der Praxis hat sich jedoch gezeigt, dass die in den Figuren 1 bis 4 dargestellte Lösung hinsichtlich der auszuführenden Manipulationen besonders vorteilhaft ist, insbesondere da die Vorrichtung einen gegenüber dem Raum fix angeordneten unteren Teller 4 aufweist, auf dem die Teigkugel 25 bequem aufgelegt werden kann. In diesem Fall ist der Teller 8 vertikal aus einer oberen offenen Stellung der Portioniervorrichtung in eine untere Stellung bei geschlossener Portioniervorrichtung absenkbar. In dieser Stellung (in den Figuren 2 und 4 dargestellt) entspricht der Abstand zwischen den Tellern 4 und 8 der gewünschten Dicke h der fertigen Teigscheibe 26.

Gemäss einer anderen bevorzugten Ausführungsform der vorliegenden Erfindung ist der obere Teller 8, damit er leichter auf und ab bewegt werden kann, auf einem Führungsstössel 7 angeordnet, der koaxial mit dem Teller 8 angeordnet und in einer vertikalen Büchse 6 verschiebbar ist, die am oberen Arm 5 des Trägerjochs 1 befestigt ist. Der Hebel 9 zieht den Stössel längs seines vertikalen Verschiebungswegs mittels eines Stiftes 28 und eines Schlitzes, die eine Umsetzung der Schwenkbewegung des Hebels 9 in eine lineare Bewegung des Stössels 7 erlauben.

Gemäss einer weiteren bevorzugten Ausführungsform der vorliegenden Erfindung ist die Büchse 13, die das Schneidorgan 12 darstellt, unterhalb des kreisrunden unteren Tellers 4 angeordnet und kann von unten nach oben verschoben werden, so dass sie aus einer Ruhelage in eine Schneidstellung verschoben wird. In der Schneidstellung muss die schneidende Kante 14 der Büchse 13 aus Gründen, die bei der Beschreibung der Funktionsweise näher zu erläutern sind, und wie in der Fig. 2 gezeigt, eindeutig (um eine Strecke, die von der prozentualen Teigüberschussmenge in der Teigkugel 25 gegenüber der fertigen Teigscheibe 26 abhängt) höher zu liegen kommen als die Oberfläche des oberen Tellers 8 in seiner Stellung mit dem im voraus festgelegten Abstand h.

Gemäss einer weiteren bevorzugten Ausführungsform der vorliegenden Erfindung ist vorgesehen, die Vertikalbewegungen des verschiebbaren Tellers, beispielsweise des oberen Tellers in dem in den Figuren 1 bis 4 gezeigten Beispiel, und des Schneidorgans 12, beispielsweise der Büchse 13 im gleichen erwähnten Beispiel, mittels eines Hebels 9, bzw. 16, für jedes der beweglichen Elemente auszuführen. Diese Hebel 9, 16 sind dabei je in einem Drehpunkt 10, bzw. 17, in solcher Weise angelenkt, dass eine vervielfachende Kraftübersetzung der von Hand auf dem Bedienungsende jedes der Hebel 9, 16 aufgebrachten Kraft erreicht wird.

Diese Anordnung dient dazu, die erforderliche, von Hand aufzubringende Kraft zum Zusammendrücken der Teigkugel und zum Abschneiden des Teigüberschusses am Rand zu verringern, wie dies im Folgenden erklärt wird. Diese Arbeitsschritte erfordern wegen der beträchtlichen Zähigkeit des Teigs eine nicht unbedeutende Kraft, insbesondere für den Arbeitsschritt des Zusammendrückens der Teigkugel 25. Der Einsatz der Hebel erleichtert die Bedienung der Vorrichtung sehr, wobei die erforderlichen Ausladungen der Hebel 9, 16 durchaus im zulässigen Rahmen des begrenzten Raumbedarfs für die Vorrichtung bleiben.

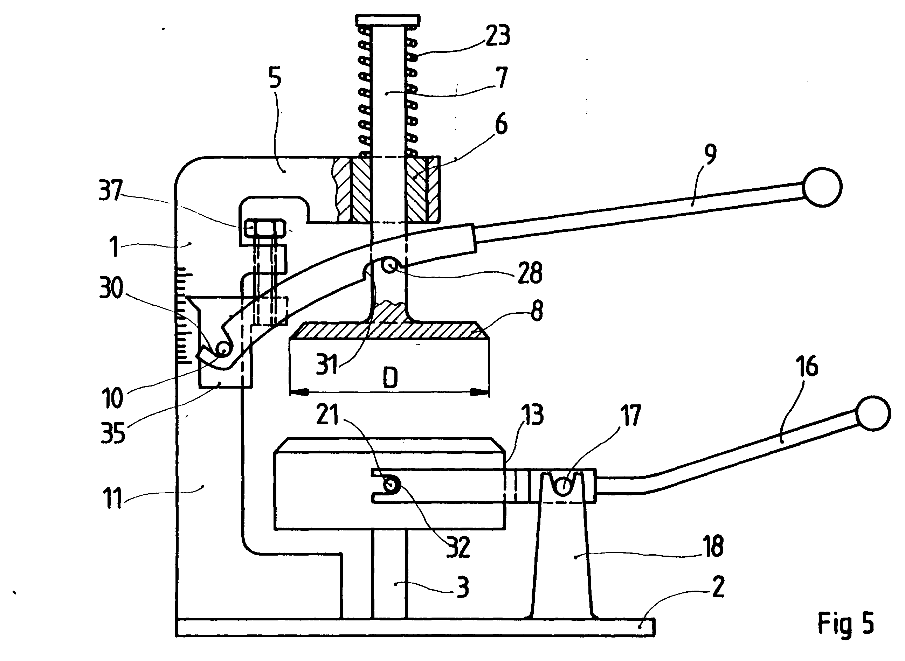

In der Fig. 5 ist eine Variante der vorliegenden Erfindung dargestellt, deren Hauptzweck darin besteht, die Portioniervorrichtung leichter transportierbar auszulegen. Zu diesem Zweck werden in der Darstellung der Vorrichtung, in der die gleichen hauptsächlichen Elemente verwendet werden, wie in der in den Figuren 1 bis 4 gezeigten Lösung, die gleichen Elemente mit den gleichen Bezugszeichen bezeichnet, wobei die Bedienungshebel 9 und 16 so ausgebildet sind, dass sie schnell und ohne Werkzeuge abmontiert werden können.

In der Fig. 5 ist dargestellt, wie der Hebel 9 für den oberen Teller 8 an seinem Drehpunkt mittels einem nach oben offenen Haken 30 "eingehängt" wird, um dies zu erreichen. In dieser Anordnung drückt der Hebel 9 mit einem weiteren nach unten offenen Hakenteil 31 auf den am vertikalen Stössel 7 befestigten Stift 28. Dieser Hakenteil ist länglich ausgebildet und kann auch als Anschlag dienen, sowohl für die oberste Stellung (in der Fig. 5 gezeigt) als auch für die unterste Stellung des oberen Tellers 8. Der Hebel 9 kann somit leicht von der Vorrichtung abgenommen werden, indem er beispielsweise zuerst aus seinem Eingriff am Stift 28 herausgezogen wird, wobei der Stössel 7 nach unten gedrückt wird und anschliessend der Hebel von seinem Drehpunktstift 10 abgehängt wird. Analog wird der Hebel 16 der Schneidbüchse 13 behandelt, der zwei offene Schlitze 32 aufweist, die mit den an der Büchse angebrachten Stiften 21 (von denen in der Fig. 5 nur einer sichtbar ist) zusammenwirken, sowie einen Drehpunktstift 17, der sich in einem nach oben offenen Schlitz im Trägerelement 18 drehen kann. Auch der Hebel 16 kann bequem und ohne Verwendung von speziellen Werkzeugen aus seiner Arbeitsstellung abgenommen werden. Es ist klar, dass die Bewegungen, welche die Arbeitselemente (Teller 8 oder 4, Schneidbüchse 13) ausführen, durch geeignete Anschläge begrenzt werden müssen (beispielsweise bestimmt der bereits beschriebene Anschlag 24 die oberste Stellung des oberen Tellers 8, oder der Anschlag 34 (Figuren 1 bis 4) die unterste Stellung der Schneidbüchse 13.

Besonders wichtig ist in diesem Zusammenhang die Möglichkeit, mittels der Anschläge die gewünschte Dicke h der fertigen Teigscheibe 26 (Fig. 4) einzustellen.

In der Fig. 5 ist eine bevorzugte Lösung für dieses Problem dargestellt, die darauf beruht, dass der Drehpunkt 10 des Hebels 9, der den oberen Teller 8 bewegt, an einem Halter 35 befestigt ist, der seinerseits in seiner vertikalen Lage einstellbar auf dem Trägerteil 11 des Trägerjochs 1 befestigt werden kann. Wird der Halter 35 und mit ihm der Stift 10 hinauf oder hinunter verschoben, wobei die Stellungen auf einer Strichskala 36 (die beispielsweise die Dicke der Teigscheibe in mm oder deren Gewicht in Gramm anzeigen kann) angezeigt sind, so verschiebt sich automatisch die untere Endstellung des oberen Tellers 8, die erreicht wird, wenn der Hebel 9 an seinem Anschlag auf der linken Seite des offenen Schlitzes 31 ansteht. Die vertikale Einstellung des Halters 35 wird mittels der Einstellschraube 37 eingestellt. Die hier beschriebene Lösung stellt lediglich ein Beispiel für eine Vielzahl analoger Möglichkeiten dar, die alle geeignet sind, eine leichte Einstellbarkeit der Dicke h der fertigen Teigscheibe 26 zu realisieren.

Gemäss einer anderen bevorzugten Ausführungsform der vorliegenden Erfindung liegt der Durchmesser D (Fig. 5) der Teller 4 und 8 zwischen 100 und 200 mm, während der minimale Endabstand h zwischen den Tellern 4 und 8 zwischen 8 und 20 mm liegt. Diese Abmessungen haben sich für die Herstellung von Pizzas als geeignet erwiesen, bei der die Teigscheibe anschliessend unter dem Einfluss der Zentrifugalkraft auf einen Durchmesser ausgezogen wird, der zwischen etwa 30 und 50 cm liegt und somit allen Anforderungen der Branche gerecht werden kann.

Eine andere bevorzugte Ausführungsvariante der erfindungsgemässen Portioniervorrichtung sieht vor, dass der obere Teller 8 und der untere Teller 4 sowie die Schneidbüchse 13, d.h. alle Elemente der Vorrichtung, die direkt mit dem Teig in Berührung kommen, aus rostfreiem Stahl gefertigt sind, der für den Kontakt mit Lebensmitteln zugelassen ist. Die übrigen Elemente der Vorrichtung können dagegen aus anderen Metallen hergestellt werden, oder allenfalls aus Kunststoffmaterialien, die genügende Widerstandsfähigkeit aufweisen.

Die erfindungsgemässe Portioniervorrichtung funktioniert gemäss einem bevorzugten Arbeitsverfahren in der im Folgenden beschriebenen Weise, wobei die Arbeitsschritte in den Figuren 1 bis 4 dargestellt sind.

Der erste Arbeitsschritt, der in der Fig. 1 gezeigt ist, besteht darin, dass eine Teigkugel 25 auf den unteren horizontalen und kreisrunden Teller 4 gelegt wird. Die Teigkugel muss dabei ein etwas grösseres Volumen aufweisen als jenes, das die fertig ausgeformte Teigscheibe 26 haben soll. Es ist die Aufgabe der Bedienungsperson, die mit etwas Erfahrung leicht lernt, Teigkugeln 25 von etwas zu grossem Volumen zu wählen und vorzulegen, nicht jedoch viel zu grosse Kugeln, damit nicht zu viel Teigreste anfallen.

Der zweite, in der Fig. 2 dargestellte Arbeitsschritt besteht darin, dass die Schneidbüchse 13 in ihre höchste obere Stellung gebracht wird (die wie in der Fig. 2 gezeigt, durch die vollständig zusammengedrückte Feder 22 bestimmt ist), und dass der obere Teller 8 abgesenkt wird bis die Teigkugel ganz in eine allseitig vom Teller 4, vom oberen Teller 8 und der zylindrischen Wand der Schneidbüchse 13 begrenzte Kammer hineingedrückt wird. Weil das Volumen der Teigkugel 25 etwas grösser gewählt wurde als jenes der gewünschten fertig ausgeformten Teigscheibe 26, kann der obere Teller 8 unter diesen Bedingungen offensichtlich nicht weiter abgesenkt werden, als bis auf eine Stellung, die höher liegt als die Höhe h der fertigen Teigscheibe 26 (Figuren 3 und 4).

Der nächste Arbeitsschritt gemäss der vorliegenden Erfindung ist in der Fig. 3 dargestellt und besteht darin, dass die Schneidbüchse 13 zuerst bis in ihre Ruhestellung abgesenkt wird, d.h. in ihre auch in der Fig. 1 gezeigte Ausgangslage, in welcher die Schneidbüchse 13 gegen den Anschlag 34 ansteht. Auf diese Weise wird die dicke Teigscheibe seitlich freigegeben. Sodann wird der obere Teller 8 weiter bis in seine tiefste Stellung abgesenkt bis zum Anschlag, welche den Endabstand, und damit die gewünschte Dicke h der fertigen Teigscheibe 26 bestimmt.

Nach dieser weiteren Absenkung des oberen Tellers 8 wird die zusammengedrückte Teigscheibe über den Rand der Teller 4 und 8 hinaus verbreitert. Dabei bildet die über die Ränder austretende Masse die überschüssige Teigmasse, d.h. das gegenüber dem gewünschten Volumen der fertigen Teigscheibe überschüssige Teigvolumen, das in der Teigkugel 25 eingebracht worden war.

Als letzer Arbeitsschritt folgt sodann, wie in der Fig. 4 gezeigt, das Anheben der Büchse 13 mit dem Schneidorgan 12 bis in ihre höchste Stellung, so dass der überschüssige Teigring 27 abgeschnitten, der seitlich aus dem Zwischenraum zwischen den beiden Tellern 4 und 8 ausgetreten ist. Danach braucht nur noch die Schneidbüchse 13 abgesenkt und der obere Teller 8 angehoben zu werden, worauf die fertig ausgeformte Teigscheibe 26 abgenommen werden kann sowie der überschüssige Teigring 27 weggenommen werden kann.

Der ganze Arbeitsablauf dauert bloss wenige Sekunden, so dass eine gut angelernte Bedienungsperson mehrere hundert Teigscheiben 26 pro Stunde ausformen kann.

Solche Teigscheiben mit genau abgemessenem Volumen, und somit indirekt von genau eingestelltem Gewicht, eignen sich ideal als Vorlage in einer Pizza-Ausziehmaschine, die unter Einsatz der Zentrifugalkraft arbeitet.

Die in den Figuren 1 bis 4 und 5 dargestellten Lösungen zeigen lediglich zwei aller im Rahmen der vorliegenden Erfindung möglichen Varianten. Selbstverständlich sind auch andere Möglichkeiten ähnlicher Art und Funktionsweise wie die gezeigten denkbar, insbesondere Lösungen, bei welchen der untere Teller nach oben bewegt wird, während der obere Teller gegenüber dem Raum feststeht, oder Lösungen, bei welchen die Stössel bzw. Träger der Teller nicht vertikal sondern horizontal angeordnet sind.

Die vorliegende Erfindung zeichnet sich durch die Einfachheit ihrer Konstruktion und ihrer Bedienung aus sowie durch die hohe Produktionsteistung, die sie ohne Verwendung irgendwelcher durch Motoren angetriebener Elemente erreichen kann.

### Liste der in den Figuren dargestellten Elemente

- 1: Träger
- 2: Grundplatte
- 3: Vertikaler Tragstift
- 4: Unterer Teller
- 5: Horizontaler oberer Arm des Trägerjochs
- 6: Lagerbüchse zur Verschiebung
- 7: Führungsstössel
- 8: Oberer Teller
- 9: Bedienungshebel
- 10: Stift
- 11: Vertikales Trägerelement
- 12: Schneidorgan
- 13: Büchse
- 14: Schneidkante
- 15: Mittel zur Verschiebung
- 16: Hebel
- 17: Drehpunktstift
- 18: Trägerelement
- 19: Gabelteil
- 20: Gabel
- 21: Stift
- 22: Kraftspeicher
- 23: Kraftspeicher
- 24: Vertikaler Anschlag
- 25: Teigkugel
- 26: Fertige Teigscheibe
- 27: Teigring
- 28: Stift
- 29: Schlitz
- 30: Schlitz
- 31: Schlitz
- 32: Schlitz
- 33: Schlitz
- 34: Schlitz
- 35: Halter
- 36: Strichskala
- 37: Einstellschraube

## Patentansprüche

1. Handbetriebene Portioniervorrichtung zum Zubereiten von Teigscheiben für Pizzas von abgemessenem Volumen, geeignet als Zwischenprodukt vor dem endgültigen mechanischen Ausziehen des Pizzateigs, insbesondere unter dem Einfluss der Zentrifugalkraft, in welcher der vorerst von Hand in Portionen von etwas grösserem Volumen als jenes der abgemessenen Teigscheiben unterteilte Teig zwischen zwei ebenen Flächen von kreisrunder Form zusammengedrückt wird,
durch die folgenden Elemente gekennzeichnet
- ein als Joch ausgebildeter Träger (1), der auf einer Grundplatte (2) befestigt ist,
- ein unterer, horizontal angeordneter kreisrunder Teller (4), auf den die vorerst von Hand abgeteilte Teigportion abgelegt wird,
- ein oberer, horizontal angeordneter kreisrunder Teller (8) von gleichem Durchmesser wie der untere Teller (4), der koaxial mit dem unteren Teller (4) ausgerichtet ist,
- Mittel, mit welchen die beiden Teller (4, 8) einander angenähert werden, bis schlussendlich der Endabstand h erreicht ist, der die gewünschte Dicke der fertigen Teigscheibe (26) bestimmt,
- ein Schneidorgan (12) für den überschüssigen Teig, der radial zwischen den beiden Tellern (4, 8) in ihrer erwähnten angenäherten Endstellung austritt, bestehend aus einer Büchse (13), die den einen der Teller umgibt (4 bzw. 8) mit einer schneidenden Kante (14), und die sich während der ganzen Phase der Annäherung der Teller (4, 8) ausserhalb des Raums zwischen den beiden Tellern (4, 8) befindet,
- Mittel (15) zum Verschieben der Büchse (13) des Schneidorgans (12) gegenüber den Tellern (4, 8) in solcher Weise, dass sie soweit angehoben wird, dass sie in den Ringraum zwischen den beiden Tellern (4, 8) eingreift und den Ring von überschüssigem Teig abschneidet, der radial aus dem Zwischenraum zwischen den beiden Tellern (4, 8) austritt.

2. Portioniervorrichtung gemäss dem Anspruch 1,
dadurch gekennzeichnet, dass
der untere, horizontal angeordnete kreisrunde Teller (4) gegenüber dem Raum feststehend angeordnet ist, während der obere, horizontal angeordnete kreisrunde Teller (8) vertikal aus einer angehobenen Stellung bei geöffneter Portioniervorrichtung in eine abgesenkte Stellung bei geschlossener Portioniervorrichtung verschoben werden kann, die dem im voraus festgelegten Endabstand (h) entspricht.

3. Portioniervorrichtung gemäss dem Anspruch 2,
dadurch gekennzeichnet, dass
der obere, horizontal angeordnete kreisrunde Teller (4) auf einem koaxial mit dem Teller (8) ausgerichteten Führungsstössel (7) angebracht ist, der in einer vertikal angeordneten Büchse (6) verschiebbar ist, die am oberen Arm (5) des Trägerjochs (1) befestigt ist.

4. Portioniervorrichtung gemäss dem Anspruch 2,
dadurch gekennzeichnet, dass
die Büchse (13), welche das Schneidorgan (12) bildet, unterhalb des unteren kreisrunden Tellers (4) angeordnet ist und achsial von unten nach oben verschoben werden kann, so dass sie aus einer Ruhestellung, in der sich ihre Schneidkante (14) in einer Ebene befindet, die tiefer liegt als die Oberfläche des unteren Tellers (4), oder auf gleicher Höhe wie diese liegt, in eine Schneidstellung gelangt, in welcher ihre Schneidkante (14) höher zu liegen kommt als die Oberfläche des oberen Tellers (8) in seiner Endstellung, bei welcher der im voraus bestimmte Endabstand (h) zwischen den beiden Tellern vorliegt.

5. Portioniervorrichtung gemäss dem Anspruch 1,
dadurch gekennzeichnet, dass
die vertikalen Bewegungen des beweglichen Tellers (8) und des Schneidorgans (12) mittels eines für jedes der Elemente vorgesehenen Hebels (9, 16) erzeugt werden, wobei der Drehpunkt (10 bzw. 17) in solcher Weise angelenkt ist, dass eine verstärkende Übersetzung der von Hand am Bedienungsende der Hebel (9, 16) aufgebrachten Kraft erreicht wird.

6. Portioniervorrichtung gemäss dem Anspruch 2 und dem Anspruch 5,
dadurch gekennzeichnet, dass
der Drehpunkt (10) des Hebels (9), der zum Bewegen des oberen Tellers (8) dient, auf einem Halter (35) angelenkt ist, der seinerseits vertikal einstellbar am vertikalen Trägerteil (11) des Trägerjochs (1) in solcher Weise befestigt wird, dass der im voraus festgelegte Endabstand zwischen den Tellern (4, 8) und somit die gewünschte Dicke (h) der fertigen Teigscheibe (26) festgelegt wird.

7. Portioniervorrichtung gemäss dem Anspruch 3,
dadurch gekennzeichnet, dass
auf den Führungsstössel (7) des oberen Tellers (8) ein Kraftspeicher (23) einwirkt, welcher den oberen Teller (8) nach oben gegen einen vertikalen Anschlag (24) drückt.

8. Portioniervorrichtung gemäss dem Anspruch 1,
dadurch gekennzeichnet, dass
die Mittel (15) zum vertikalen Verschieben der Büchse (13) des Schneidorgans (12) einen Kraftspeicher (22) umfassen, der die Büchse (13) gegen einen vertikalen Anschlag drückt, der sie ausserhalb des Ringraums zwischen den beiden Tellern (4, 8) in allen ihren gegenseitigen vertikalen Stellungen hält.

9. Portioniervorrichtung gemäss dem Anspruch 5,
dadurch gekennzeichnet, dass
die Drehpunkte (10, 28) der Bedienungshebel (9, 16) als offene Schlitze (30, 31, 32, 33) in solcher Weise ausgelegt sind, dass die Hebel (9, 16) ohne Verwendung von Werkzeugen montiert und abgenommen werden können, um insbesondere den Transport und den Versand der Portioniervorrichtung zu erleichtern.

10. Portioniervorrichtung gemäss dem Anspruch 1,
dadurch gekennzeichnet, dass
der Durchmesser (D) der Teller (4, 8) zwischen 100 und 200 mm liegt, und dass der Endabstand (h) zwischen den Tellern (4, 8) zwischen 8 und 20 mm liegt.

11. Portioniervorrichtung gemäss dem Anspruch 1,
dadurch gekennzeichnet, dass
mindestens der obere Teller (8) und der untere Teller (4) sowie die Schneidbüchse (13) aus rostfreiem Stahl gefertigt sind, der für direkten Kontakt mit Lebensmitteln zugelassen ist.

12. Verfahren zum Betrieb der Portioniervorrichtung gemäss dem Anspruch 1, gekennzeichnet durch die folgenden Verfahrensschritte:
- Einlegen einer Kugel (25) aus Pizzateig, deren Volumen sicher grösser ist als das gewünschte, auf den unteren kreisrunden Tisch (4),
- Anheben der Büchse (13) des Schneidorgans (12) bis auf seine grösste Höhenstellung und Absenken des oberen kreisrunden Tellers (8), bis die Teigkugel ganz in eine Kammer eingepresst ist, die allseitig begrenzt ist durch den unteren Teller (4), den oberen Teller (8) und die zylindrische Seitenwand der Büchse (13),
- Absenken der Büchse (13) des Schneidorgans (12) bis in deren untere Ruhelage und, nachdem das Absenken des Schneidorgans ausgeführt ist, weiteres Absenken des oberen Tellers (8) bis dieser seinen unteren Anschlagpunkt erreicht, der den im voraus festgelegten Endabstand (h) zwischen den Tellern bestimmt,
- Anheben der Büchse (13) des Schneidorgans (12) bis auf seine höchste Stellung, so dass der radial aus dem Zwischenraum zwischen den beiden Tellern (4, 8) ausgetretene Ring von überschüssigem Teig (27) abgeschnitten wird,
- Absenken der Büchse (13)des Schneidorgans (12) bis zum unteren Anschlag (34), Anheben des oberen Tellers (8), Herausnehmen der fertigen Teigscheibe (26) und Wegnehmen des überschüssigen Teigrings (27).
